# EUROPEAN PATENT APPLICATION

(11) **EP 4 681 868 A1**
(43) Date of publication of application: **21.01.2026**
(21) Application number: 24883603.3
(22) Date of filing: 04.12.2024
(51) Int. Cl.: B23Q 3/157

(54) **AUTOMATIC TOOL EXCHANGE DEVICE**

(30) Priority: 28.05.2024 JP 2024085987
(71) Applicant: DMG Mori Co., Ltd., Nara-shi, Nara 630-8122 (JP)
(72) Inventor: ISHITSUKA, Makoto, Nara-shi, Nara 630-8122 (JP); KANAIWA, Katsuki, Nara-shi, Nara 630-8122 (JP); NAKAMURA, Takaya, Nara-shi, Nara 630-8122 (JP)
(74) Representative: Isarpatent
(86) International application number: PCT/JP2024/042828
(87) International publication number: WO 2025/248818

(57) **Abstract**

An automatic tool changer includes a tool change portion (21). The tool change portion (21) includes a first grip portion (31A) and a second grip portion (31B), a first lock mechanism (41A) that operates between a lock state and a release state in response to a sliding motion of the first lock pin (42A), a second lock mechanism (41B) that operates between a lock state and a release state in response to a sliding motion of the second lock pin (42B), and a pin coupling unit (61) that couples the first lock pin (42A) and the second lock pin (42B) to each other and slides along an axial direction of the predetermined axis (101) during operation of the first lock mechanism (41A) and the second lock mechanism (41B). The automatic tool changer further includes a detector (71) configured to detect a position of the pin coupling unit (61) in the axial direction of the predetermined axis (101).

## Description

### TECHNICAL FIELD

The present invention relates to an automatic tool changer.

### BACKGROUND ART

For example, Japanese Patent Laying-Open No. 2020-124762 (PTL 1) discloses an automatic tool changer including a first changer arm having a first grip portion capable of gripping a tool and a second changer arm having a second grip portion capable of gripping a tool.

### CITATION LIST

### PATENT LITERATURE

PTL 1: Japanese Patent Laying-Open No. 2020-124762

### SUMMARY OF INVENTION

### TECHNICAL PROBLEM

As disclosed in PTL 1 above, an automatic tool changer (ATC) is known that includes a first grip portion and a second grip portion, each of which is capable of gripping a tool, and can simultaneously change a tool disposed at a tool standby position and a tool held by a tool spindle or the like.

In such a so-called double-arm automatic tool changer, it is necessary to accurately detect the lock state of the tools gripped by the first grip portion and the second grip portion in order to prevent the tools from falling out during tool change.

An object of the present invention is to provide an automatic tool changer that can accurately detect lock states of tools gripped by a first grip portion and a second grip portion.

### SOLUTION TO PROBLEM

An automatic tool changer according to the present invention includes a tool change portion that slides in an axial direction of a predetermined axis and swivels about the predetermined axis to change a tool. The tool change portion includes: a first grip portion and a second grip portion spaced apart from each other in a circumferential direction of the predetermined axis, each grip portion being configured to grip a tool; a first lock mechanism including a first lock pin extending in the axial direction of the predetermined axis, the first lock mechanism operating, in response to a sliding motion of the first lock pin along the axial direction of the predetermined axis, between a lock state in which the tool gripped by the first grip portion is held and a release state in which the tool gripped by the first grip portion is released; a second lock mechanism including a second lock pin extending in the axial direction of the predetermined axis, the second lock mechanism operating, in response to a sliding motion of the second lock pin along the axial direction of the predetermined axis, between a lock state in which the tool gripped by the second grip portion is held and a release state in which the tool gripped by the second grip portion is released; and a pin coupling unit that couples the first lock pin and the second lock pin to each other and slides along the axial direction of the predetermined axis during operation of the first lock mechanism and the second lock mechanism. The automatic tool changer further includes a detector configured to detect a position of the pin coupling unit in the axial direction of the predetermined axis.

### ADVANTAGEOUS EFFECTS OF INVENTION

According to the present invention, an automatic tool changer can be provided that can accurately detect the lock states of the tools gripped by the first grip portion and the second grip portion.

### BRIEF DESCRIPTION OF DRAWINGS

Fig. 1 is a schematic sectional view of an automatic tool changer (initial state) in an embodiment of the present invention.
Fig. 2 is a schematic sectional view of the automatic tool changer (release state) in the embodiment of the present invention.
Fig. 3 is a schematic sectional view of the automatic tool changer (lock state) in the embodiment of the present invention.
Fig. 4 is a perspective view of a tool change portion in the automatic tool changer in Fig. 2.
Fig. 5 is a schematic sectional view of a drive mechanism of the tool change portion in Fig. 4.
Fig. 6 is a sectional view of the automatic tool changer during tool change.
Fig. 7 is another sectional view of the automatic tool changer during tool change.
Fig. 8 is still another sectional view of the automatic tool changer during tool change.
Fig. 9 is a front view of the automatic tool changer during tool change.
Fig. 10 is another front view of the automatic tool changer during tool change.
Fig. 11 is still another front view of the automatic tool changer during tool change.
Fig. 12 is a flowchart showing steps of tool change by the automatic tool changer.

### DESCRIPTION OF EMBODIMENTS

An embodiment of the present invention will be described with reference to the drawings. In the drawings referred to below, the same or corresponding components have the same reference signs allotted.

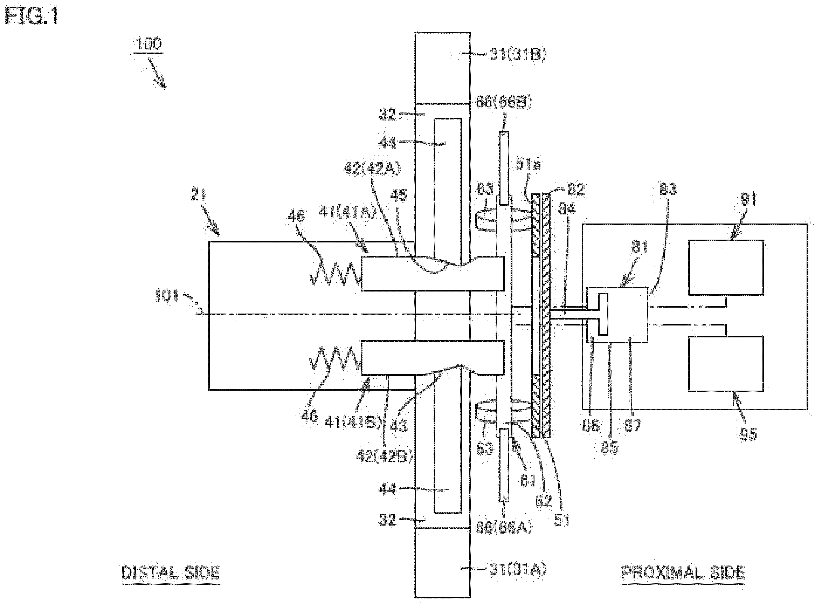

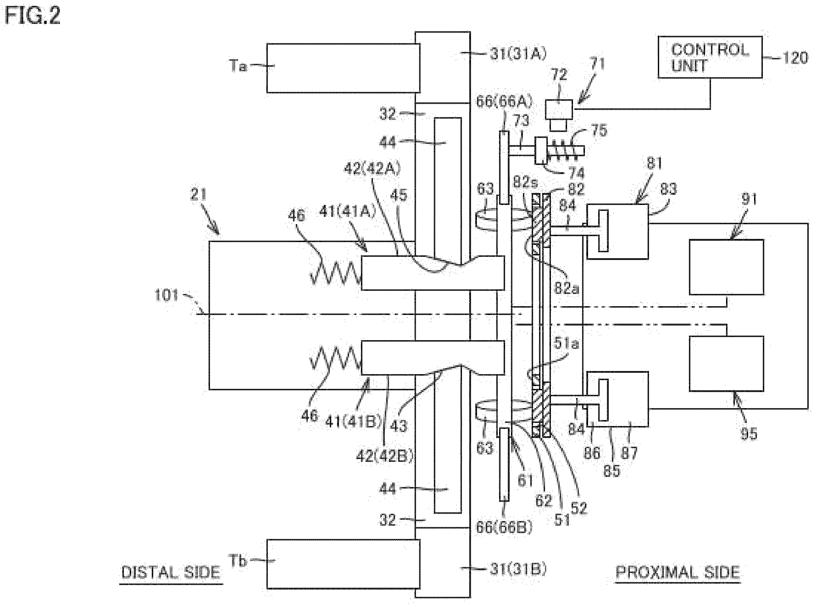

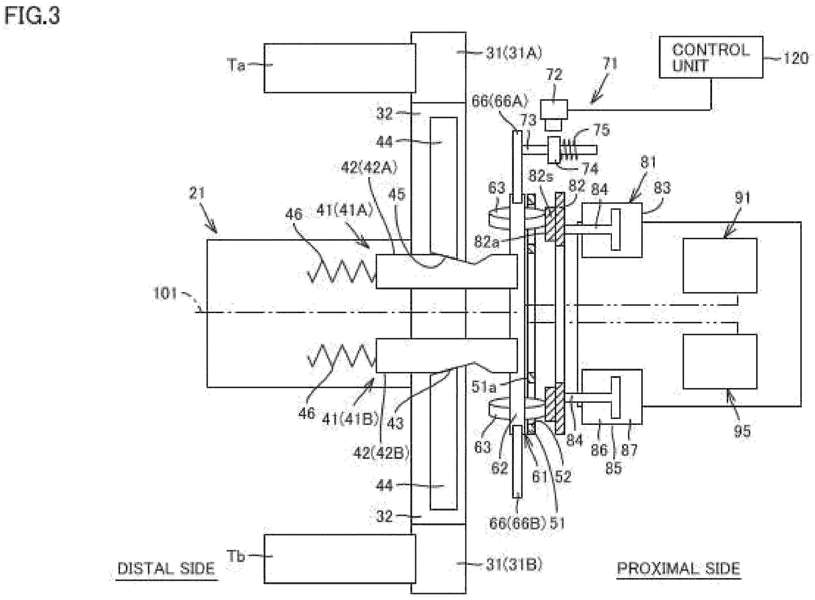

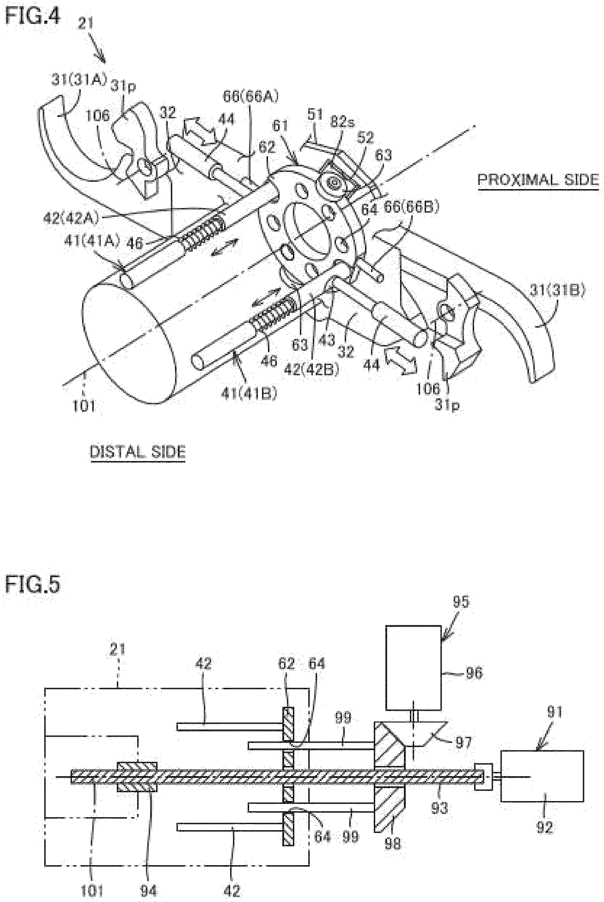

Fig. 1 is a schematic sectional view of an automatic tool changer (initial state) in the embodiment of the present invention. Fig. 2 is a schematic sectional view of the automatic tool changer (release state) in the embodiment of the present invention. Fig. 3 is a schematic sectional view of the automatic tool changer (lock state) in the embodiment of the present invention. Fig. 4 is a perspective view of a tool change portion in the automatic tool changer in Fig. 2.

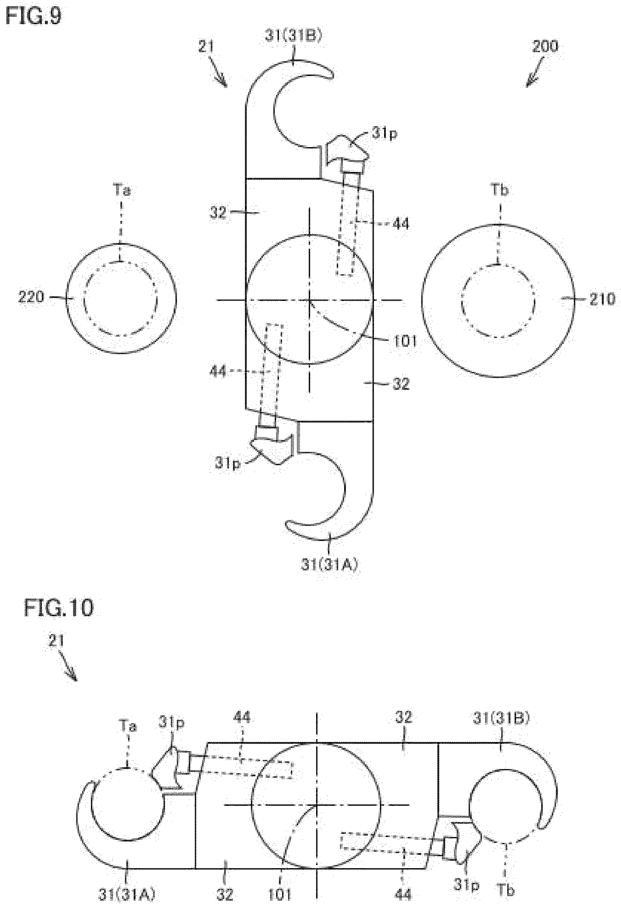

Fig. 1 shows a cross-sectional shape of an automatic tool changer 100, which will be shown in Fig. 9 referred to later, cut along a vertical plane. Figs. 2 and 3 show cross-sectional shapes of automatic tool changer 100, which will be shown in Fig. 10 referred to later, cut along a vertical plane.

Referring to Figs. 1 to 4, automatic tool changer 100 in the present embodiment is provided in a machine tool. The machine tool may be a machining center, a multitasking machine having the turning function using a fixed tool and the milling function using a rotating tool, or an additive manufacturing (AM)/subtractive manufacturing (SM) hybrid machine capable of additive manufacturing and subtractive manufacturing of a workpiece.

Automatic tool changer 100 changes tools used for machining a workpiece in the machining area in the machine tool. The present embodiment will describe, as an example, a case where automatic tool changer 100 changes a tool mounted on a tool spindle of a horizontal machining center.

Automatic tool changer 100 has a tool change portion 21. Tool change portion 21 slides in the axial direction of a predetermined axis 101 and swivels about predetermined axis 101 to change a tool. In other words, tool change portion 21 is the part that slides in the axial direction of predetermined axis 101 and swivels about predetermined axis 101 together with a tool to be changed during tool change by automatic tool changer 100.

Predetermined axis 101 is a virtual straight line and extends in a horizontal direction parallel to the rotation axis of the tool spindle.

Tool change portion 21 has a first grip portion 31A and a second grip portion 31B. First grip portion 31A and second grip portion 31B have the same structure.

As shown in Fig. 4, each grip portion 31 of first grip portion 31A and second grip portion 31B can grip a tool. Grip portion 31 has a semi-ring shape that can receive a shank portion of the tool. Grip portion 31 has a claw portion 31p. Claw portion 31p is capable of swinging about a swing axis 106 that is parallel to predetermined axis 101. Claw portion 31p is provided so as to abut against the shank portion of the tool gripped by grip portion 31.

Tool change portion 21 further has an arm portion 32. Arm portion 32 extends in an arm shape from predetermined axis 101 to the opposite sides radially outward of predetermined axis 101. First grip portion 31A and second grip portion 31B are provided at one end and the other end, respectively, of arm portion 32 in the radial direction of predetermined axis 101. First grip portion 31A and second grip portion 31B are spaced apart from each other in the circumferential direction of predetermined axis 101. First grip portion 31A and second grip portion 31B are provided at angular positions displaced 180° about predetermined axis 101.

As shown in Fig. 4, for the purpose of describing the structure of automatic tool changer 100, one side and the other side along the axial direction of predetermined axis 101 will be herein referred to as the "proximal side" and the "distal side", respectively. The direction from the proximal side to the distal side in the axial direction of predetermined axis 101 corresponds to the direction of extraction of the tool from the tool spindle, tool pot, or the like, and the direction from the distal side to the proximal side in the axial direction of predetermined axis 101 corresponds to the direction of insertion of the tool into the tool spindle, tool pot, or the like. The shank portion of the tool extends to the proximal side in the axial direction of predetermined axis 101, and the cutting edge portion of the tool extends to the distal side in the axial direction of predetermined axis 101, relative to grip portion 31.

Tool change portion 21 further has a first lock mechanism 41A and a second lock mechanism 41B. First lock mechanism 41A and second lock mechanism 41B have the same structure.

First lock mechanism 41A has a first lock pin 42A. Second lock mechanism 41B has a second lock pin 42B. Each lock pin 42 of first lock pin 42A and second lock pin 42B extends in the axial direction of predetermined axis 101. Lock pin 42 has a pin shape extending in the axial direction of predetermined axis 101.

First lock mechanism 41A operates between a lock state in which the tool gripped by first grip portion 31A is held and a release in which the tool gripped by first grip portion 31A is released, in response to a sliding motion of first lock pin 42A along the axial direction of predetermined axis 101. Second lock mechanism 41B operates between a lock state in which the tool gripped by second grip portion 31B is held and a release state in which the tool gripped by second grip portion 31B is released, in response to a sliding motion of second lock pin 42B along the axial direction of predetermined axis 101.

To describe more specifically, first lock pin 42A and second lock pin 42B are spaced apart from each other in the circumferential direction of predetermined axis 101. First lock pin 42A and second lock pin 42B are provided at angular positions displaced 180° about predetermined axis 101. First lock pin 42A is provided apart from first grip portion 31A radially inward of predetermined axis 101. Second lock pin 42B is provided apart from second grip portion 31B radially inward of predetermined axis 101.

Lock pin 42 has a wedge portion 43. Wedge portion 43 has a groove shape that is recessed from the outer circumferential surface of lock pin 42, which faces radially outward of predetermined axis 101. Wedge portion 43 is provided in a tapered shape such that the distance from predetermined axis 101 to the groove bottom surface formed by wedge portion 43 varies along the axial direction of predetermined axis 101. The distance from predetermined axis 101 to the groove bottom surface formed by wedge portion 43 increases from the proximal side to the distal side in the axial direction of predetermined axis 101.

Each lock mechanism 41 of first lock mechanism 41A and second lock mechanism 41B further has a spring member 46 and a lock rod 44.

Spring member 46 is provided to lock pin 42. Spring member 46 is formed of, for example, a coil spring extending spirally in the axial direction of predetermined axis 101. Spring member 46 exerts, on lock pin 42, an elastic force in the axial direction of predetermined axis 101. Spring member 46 exerts, on lock pin 42, an elastic force in the direction from the distal side to the proximal side in the axial direction of predetermined axis 101.

Lock rod 44 is provided between grip portion 31 (claw portion 31p) and lock pin 42. Lock rod 44 extends in a shaft shape between claw portion 31p and lock pin 42. Lock rod 44 is slidably guided by a guide member (not shown) along the axial direction in which lock rod 44 extends.

One end of lock rod 44 is disposed relatively radially inward of predetermined axis 101, and the other end of lock rod 44 is disposed relatively radially outward of predetermined axis 101. One end of lock rod 44 is in abutment against wedge portion 43. Lock rod 44 has a tapered portion 45. Tapered portion 45 is provided at one end of lock rod 44. Tapered portion 45 forms a tapered surface corresponding to the groove bottom surface formed by wedge portion 43. Tapered portion 45 is in surface contact with the groove bottom surface formed by wedge portion 43. The other end of lock rod 44 is coupled to grip portion 31 (claw portion 31p).

As shown in Fig. 2, when lock pin 42 is positioned on the distal side, lock rod 44 is disposed at the stroke end radially inward of predetermined axis 101. Claw portion 31p is positioned away from the shank portion of the tool. Each lock mechanism 41 of first lock mechanism 41A and second lock mechanism 41B is in the release state in which the tool gripped by grip portion 31 is released.

As shown in Fig. 3, when lock pin 42 is positioned on the proximal side, lock rod 44 is disposed at the stroke end radially outward of predetermined axis 101. Claw portion 31p is positioned while abutting against the shank portion of the tool. Each lock mechanism 41 of first lock mechanism 41A and second lock mechanism 41B is in the lock state in which the tool gripped by grip portion 31 is held.

As shown in Figs. 1 to 4, tool change portion 21 further has a pin coupling unit 61. Pin coupling unit 61 couples first lock pin 42A and second lock pin 42B to each other.

Pin coupling unit 61 slides in the axial direction of predetermined axis 101 during operation of first lock mechanism 41A and second lock mechanism 41B (lock mechanism 41). Pin coupling unit 61 slides in the direction from the distal side to the proximal side of predetermined axis 101 during operation of lock mechanism 41 from the release state to the lock state. Pin coupling unit 61 slides in the direction from the proximal side to the distal side of predetermined axis 101 during operation of lock mechanism 41 from the lock state to the release state.

Pin coupling unit 61 has a plate portion 62 and a plurality of rollers 63. Plate portion 62 is formed of a plate member in which the axial direction of predetermined axis 101 corresponds to the thickness direction thereof. Plate portion 62 is disposed about predetermined axis 101. Plate portion 62 has a ring shape centered on predetermined axis 101. Plate portion 62 faces arm portion 32 while being spaced apart therefrom in the axial direction of predetermined axis 101. Plate portion 62 couples first lock pin 42A and second lock pin 42B to each other. First lock pin 42A and second lock pin 42B are connected to plate portion 62. The end of lock pin 42 on the proximal side in the axial direction of predetermined axis 101 is connected to plate portion 62.

The plurality of rollers 63 are attached to plate portion 62. The plurality of rollers 63 are spaced apart from each other in the circumferential direction of predetermined axis 101. The plurality of rollers 63 are equidistantly provided in the circumferential direction of predetermined axis 101. Roller 63 is rotatable about a rotation axis extending in the radial direction of predetermined axis 101. Roller 63 is provided so as to protrude from plate portion 62 to at least the proximal side in the axial direction of predetermined axis 101. In the present embodiment, pin coupling unit 61 has two rollers 63.

Pin coupling unit 61 further has a first pin member 66A and a second pin member 66B. Each pin member 66 of first pin member 66A and second pin member 66B is connected to plate portion 62. Pin member 66 protrudes from plate portion 62 radially outward of predetermined axis 101.

First pin member 66A and second pin member 66B are provided at angular positions displaced 180° in the circumferential direction of predetermined axis 101.

Automatic tool changer 100 further has a base member 51. Base member 51 is formed of a plate member in which the axial direction of predetermined axis 101 corresponds to the thickness direction thereof. Base member 51 is disposed to face tool change portion 21 in the axial direction of predetermined axis 101. Base member 51 is disposed to face plate portion 62 in the axial direction of predetermined axis 101. Base member 51 is disposed between plate portion 62 and a driving plate 82, which will be described later, in the axial direction of predetermined axis 101.

Base member 51 is a fixed plate, and the position of base member 51 is fixed. Base member 51 is a part that does not slide in the axial direction of predetermined axis 101 and does not swivel about predetermined axis 101 during tool change by automatic tool changer 100.

As shown in Fig. 1, base member 51 comes into contact with the plurality of rollers 63 during swiveling of tool change portion 21 about predetermined axis 101. The plurality of rollers 63 rotate while being in contact with base member 51 during swiveling of tool change portion 21 about predetermined axis 101.

As shown in Figs. 2 to 4, base member 51 has a plurality of cut-away portions 52. Cut-away portion 52 is formed as a through hole that penetrates base member 51 in the axial direction of predetermined axis 101. The plurality of cut-away portions 52 are spaced apart from each other in the circumferential direction of predetermined axis 101. The plurality of cut-away portions 52 are provided respectively in correspondence with the plurality of rollers 63. The plurality of cut-away portions 52 respectively face the plurality of rollers 63 in the axial direction of predetermined axis 101 during operation of lock mechanism 41 between the release state and the lock state.

Automatic tool changer 100 further has a lock actuator 81. Lock actuator 81 is a drive device for operating first lock mechanism 41A and second lock mechanism 41B (lock mechanism 41) between the release state and the lock state.

Lock actuator 81 is disposed on the proximal side in the axial direction of predetermined axis 101 with respect to tool change portion 21. Lock actuator 81 is provided opposite to lock mechanism 41 with pin coupling unit 61 (plate portion 62) in between in the axial direction of predetermined axis 101. Lock actuator 81 is a part that does not slide in the axial direction of predetermined axis 101 and does not swivel about predetermined axis 101 during tool change by automatic tool changer 100.

Lock actuator 81 has a plurality of piston cylinders 83 and a driving plate 82.

The plurality of piston cylinders 83 are spaced apart from each other in the circumferential direction of predetermined axis 101. The plurality of piston cylinders 83 are equidistantly provided in the circumferential direction of predetermined axis 101. The power source of piston cylinders 83 is a hydraulic pressure.

Driving plate 82 is formed of a plate member in which the axial direction of predetermined axis 101 corresponds to the thickness direction thereof. Driving plate 82 has a ring shape centered on predetermined axis 101. Driving plate 82 faces base member 51 in the axial direction of predetermined axis 101. Driving plate 82 is disposed opposite to plate portion 62 with respect to base member 51 in the axial direction of predetermined axis 101.

As shown in Figs. 2 to 4, driving plate 82 has a plurality of protrusions 82s. Protrusion 82s has a protruding shape that protrudes in the axial direction of predetermined axis 101. Protrusion 82s protrudes so as to approach base member 51 in the axial direction of predetermined axis 101. The plurality of protrusions 82s are spaced apart from each other in the circumferential direction of predetermined axis 101. The plurality of protrusions 82s are provided respectively in correspondence with the plurality of rollers 63. During operation of first lock mechanism 41A and second lock mechanism 41B, protrusion 82s and roller 63 come into contact with each other through cut-away portion 52.

Piston cylinder 83 is capable of extension driving and contraction driving along the axial direction of predetermined axis 101. Piston cylinder 83 has a cylinder case 85 and a piston rod 84. Piston rod 84 is combined with cylinder case 85. Piston rod 84 extends in the axial direction of predetermined axis 101. An end of piston rod 84 is connected to driving plate 82. During extension driving of piston cylinder 83, oil is supplied to a first hydraulic chamber 87 in cylinder case 85, causing piston rod 84 to stroke from the proximal side to the distal side in the axial direction of predetermined axis 101. During contraction driving of piston cylinder 83, oil is supplied to a second hydraulic chamber 86 in cylinder case 85, causing piston rod 84 to stroke from the distal side to the proximal side in the axial direction of predetermined axis 101.

As shown in Figs. 2 to 4, during operation of lock mechanism 41 from the release state to the lock state, piston cylinder 83 is subjected to contraction driving. Driving plate 82 slides from the distal side to the proximal side of predetermined axis 101. First lock pin 42A and second lock pin 42B slide from the distal side to the proximal side of predetermined axis 101 due to the elastic force of spring member 46 from the distal side to the proximal side of predetermined axis 101. Pin coupling unit 61, which integrally connects first lock pin 42A and second lock pin 42B, slides from the distal side to the proximal side of predetermined axis 101 as the plurality of rollers 63 come into contact with driving plate 82 (the plurality of protrusions 82s). Lock rod 44 slides radially outward of predetermined axis 101 as the position of contact of tapered portion 45 with wedge portion 43 is moved from radially inward to radially outward of predetermined axis 101. Claw portion 31p swings about swing axis 106 and abuts against the shank portion of the tool.

During operation of lock mechanism 41 from the lock state to the release state, piston cylinder 83 is subjected to extension driving. Driving plate 82 slides from the proximal side to the distal side in the axial direction of predetermined axis 101. Pin coupling unit 61 slides from the proximal side to the distal side in the axial direction of predetermined axis 101 as driving plate 82 (the plurality of protrusions 82s) pushes the plurality of rollers 63 from the proximal side to the distal side in the axial direction of predetermined axis 101. First lock pin 42A and second lock pin 42B, which are integrally coupled by pin coupling unit 61, slide from the proximal side to the distal side in the axial direction of predetermined axis 101 while resisting the elastic force of spring member 46. Lock rod 44 slides radially inward of predetermined axis 101 as the position of contact between tapered portion 45 and wedge portion 43 is moved from radially outward to radially inward of predetermined axis 101. Claw portion 31p swings about swing axis 106 opposite to the side of the previous case and moves away from the shank portion of the tool.

The lock actuator in the present invention is not limited to piston cylinder 83 driven by hydraulic pressure described above, and may be, for example, a piston cylinder driven by air pressure.

Automatic tool changer 100 further has a detector 71. Detector 71 can detect the position of pin coupling unit 61 in the axial direction of predetermined axis 101. Detector 71 is provided opposite to lock mechanism 41 with pin coupling unit 61 (pin member 66) in between in the axial direction of predetermined axis 101. Detector 71 is a part that does not slide in the axial direction of predetermined axis 101 or swivel about predetermined axis 101 during tool change by automatic tool changer 100.

Detector 71 has a sensor 72, a detection pin 73, and a spring member 75. Sensor 72 is formed of a proximity sensor.

Detection pin 73 has a pin shape extending in the axial direction of predetermined axis 101. Detection pin 73 has a dog 74 to be detected by sensor 72. Detection pin 73 is supported so as to slide in the axial direction of predetermined axis 101. Detector 71 (detection pin 73) is provided while facing pin member 66 in the axial direction of predetermined axis 101.

Spring member 75 is provided to detection pin 73. Spring member 75 exerts an elastic force on detection pin 73 from the proximal side to the distal side in the axial direction of predetermined axis 101. Detection pin 73 is biased against pin member 66 in the axial direction of predetermined axis 101 by the elastic force of spring member 75.

With this configuration, detection pin 73 slides in the axial direction of predetermined axis 101 together with pin coupling unit 61 during operation of lock mechanism 41 between the release state and the lock state. In the release state of lock mechanism 41 shown in Fig. 2, dog 74 is disposed at a position displaced from sensor 72. In the lock state shown in Fig. 3, dog 74 is positioned so as to face sensor 72.

The type of the sensor used in the detector in the present invention is not limited to a proximity sensor, and may be, for example, a photoelectric sensor. A contact-type sensor such as a microswitch or limit switch may also be used.

Fig. 5 is a schematic sectional view of the drive mechanism of the tool change portion in Fig. 4. Referring to Figs. 1 to 5, automatic tool changer 100 further has a slide actuator 91 and a swivel actuator 95.

Slide actuator 91 is a drive device for sliding tool change portion 21 in the axial direction of predetermined axis 101 during tool change. Slide actuator 91 includes a motor 92, a screw 93, and a nut 94. Screw 93 and nut 94 constitute a ball screw.

Motor 92 is formed of a servomotor that can control the rotational angle (position) of the motor. Screw 93 is connected to the output shaft of motor 92. Screw 93 extends along predetermined axis 101. Screw 93 extends from the proximal side to the distal side of predetermined axis 101 while passing through the inside of plate portion 62 that has a ring shape. A gap is provided between screw 93 and plate portion 62. Screw 93 can rotate in the forward direction and the reverse direction about predetermined axis 101 upon receipt of input of rotation from motor 92. Nut 94 is screwed onto screw 93. Nut 94 is connected to tool change portion 21. Nut 94 is slidable in the axial direction of predetermined axis 101 in response to the rotation of screw 93.

In this configuration, the rotation in the forward direction or the reverse direction output from motor 92 is transmitted to screw 93, causing screw 93 to rotate about predetermined axis 101. As screw 93 rotates, nut 94 slides from the proximal side to the distal side in the axial direction of predetermined axis 101, or slides from the distal side to the proximal side in the axial direction of predetermined axis 101. As a result, tool change portion 21 connected to nut 94 slides from the proximal side to the distal side in the axial direction of predetermined axis 101, or slides from the distal side to the proximal side in the axial direction of predetermined axis 101.

Swivel actuator 95 is a drive device for swiveling tool change portion 21 about predetermined axis 101 during tool change. Swivel actuator 95 has a motor 96, a first gear 97, a second gear 98, and a plurality of guide pins 99.

Motor 96 is formed of a servomotor that can control the rotation angle (position) of the motor. The output shaft of motor 96 extends so as to be orthogonal to predetermined axis 101. First gear 97 is connected to the output shaft of motor 96. First gear 97 is formed of a bevel gear. Second gear 98 is formed of a bevel gear centered on predetermined axis 101 and meshes with first gear 97. The plurality of guide pins 99 are connected to second gear 98. The plurality of guide pins 99 are spaced apart from each other in the circumferential direction of predetermined axis 101. Guide pin 99 extends in the axial direction of predetermined axis 101.

As shown in Figs. 4 and 5, plate portion 62 has a plurality of guide pin holes 64. The plurality of guide pin holes 64 are spaced apart from each other in the circumferential direction of predetermined axis 101. Guide pin holes 64 penetrate plate portion 62 in the axial direction of predetermined axis 101. The plurality of guide pins 99 are respectively disposed in the plurality of guide pin holes 64. Guide pin 99 extends from the proximal side to the distal side of predetermined axis 101 through guide pin hole 64. A gap is provided between the inner circumferential wall of plate portion 62 that defines guide pin holes 64 and guide pin 99.

In this configuration, the rotation from motor 96 is transmitted to second gear 98 via first gear 97, causing second gear 98 to rotate about predetermined axis 101. The plurality of guide pins 99 connected to second gear 98 move in the circumferential direction of predetermined axis 101. The motion of the plurality of guide pins 99 in the circumferential direction of predetermined axis 101 is transmitted to plate portion 62, causing pin coupling unit 61 to swivel about predetermined axis 101.

In contrast, guide pins 99 and plate portion 62 are slidable in the axial direction of predetermined axis 101 with guide pins 99 positioned in guide pin holes 64. Plate section 62 is slidably guided by the plurality of guide pins 99 in the axial direction of predetermined axis 101. With this configuration, when motor 92 outputs rotation in slide actuator 91, plate portion 62 can slide in the axial direction of predetermined axis 101.

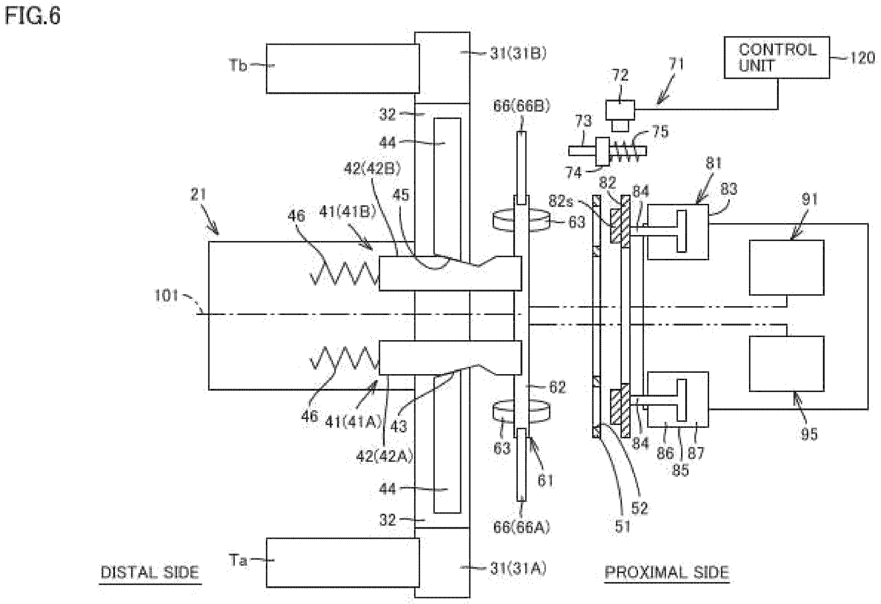

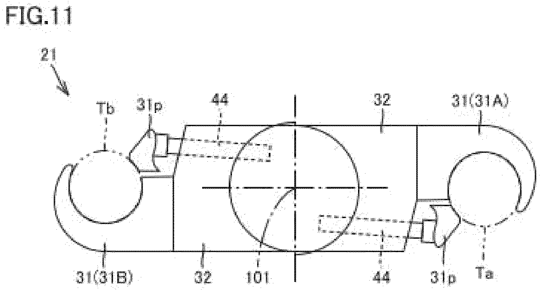

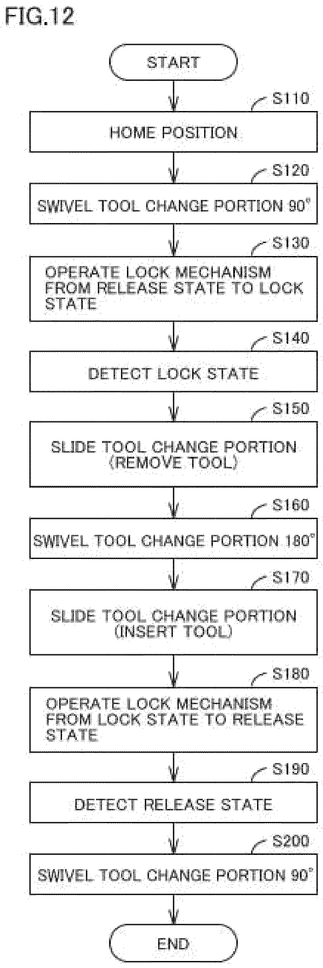

Figs. 6 to 8 are sectional views of an automatic tool changer during tool change. Figs. 6 to 8 show the cross-sectional shape of automatic tool changer 100 corresponding to Figs. 2 and 3. Figs. 9 to 11 are front views of the automatic tool changer during tool change. Figs. 9 to 11 show automatic tool changer 100 (tool change portion 21) as viewed from the distal side to the proximal side of predetermined axis 101. Fig. 12 is a flowchart showing the steps of tool change by the automatic tool changer.

As shown in Figs. 1, 9, and 12, in the initial state of tool change, tool change portion 21 is disposed at the home position (S110). At the home position, tool change portion 21 is oriented such that arm portion 32 extends in the upward-downward direction, and that second grip portion 31B and first grip portion 31A are disposed above and below tool change portion 21, respectively. Each lock mechanism 41 of first lock mechanism 41A and second lock mechanism 41B is in the release state.

In the initial state of tool change, the plurality of rollers 63 are in contact with base member 51. Base member 51 has a first surface 51a. First surface 51a is a plane that is orthogonal to predetermined axis 101. First surface 51a faces the distal side in the axial direction of predetermined axis 101. The plurality of rollers 63 are in contact with first surface 51a.

The plurality of protrusions 82s are respectively disposed in the plurality of cut-away portions 52 (the state of cut-away portions 52 and protrusions 82s shown in Fig. 2). Protrusion 82s has a second surface 82a. Second surface 82a is disposed at the protruding end in the axial direction of predetermined axis 101 and is a plane that is orthogonal to predetermined axis 101. Second surface 82a faces the distal side in the axial direction of predetermined axis 101. First surface 51a and second surface 82a are flush with each other. The plurality of rollers 63 are respectively disposed at positions 90° apart from the plurality of cut-away portions 52 (the plurality of protrusions 82s) in the circumferential direction of predetermined axis 101.

In addition to automatic tool changer 100, a machine tool 200 has a tool holder (tool spindle) 210 that can hold a tool used for workpiece machining. A first tool Ta to be used in the next machining is held in a tool pot 220, which is disposed at the tool standby position outside the machining area of machine tool 200, and a second tool Tb that has finished machining is held in tool holder (tool spindle) 210, which is disposed at the tool change position in the machining area of machine tool 200.

As shown in Figs. 2, 10, and 12, then, tool change portion 21 is swiveled 90° by driving swivel actuator 95 (rotating motor 96) (S120). During swiveling of tool change portion 21, the plurality of rollers 63 rotate while being in contact with base member 51 (first surface 51a). When swiveling of tool change portion 21 is complete, the plurality of rollers 63 respectively come into contact with the plurality of protrusions 82s (second surfaces 82a) disposed in the respective cut-away portions 52. The shank portion of first tool Ta is disposed in first grip portion 31A, and the shank portion of second tool Tb is disposed in second grip portion 31B. Detection pin 73 in detector 71 faces first pin member 66A in the axial direction of predetermined axis 101.

As shown in Figs. 3 and 12, then, the clamp of second tool Tb by the tool spindle is released, and each lock mechanism 41 of first lock mechanism 41A and second lock mechanism 41B is operated from the release state to the lock state by driving lock actuator 81 (contraction driving of piston cylinder 83) (S130). The plurality of protrusions 82s respectively exit from the plurality of cut-away portions 52. The plurality of rollers 63 respectively enter the plurality of cut-away portions 52 while maintaining contact with the respective protrusions 82s. This allows sliding of pin coupling unit 61 from the distal side to the proximal side in the axial direction of predetermined axis 101. Detection pin 73 in detector 71 is pushed by first pin member 66A to slide from the distal side to the proximal side in the axial direction of predetermined axis 101 while resisting the elastic force of spring member 75.

Detector 71 detects the lock state of lock mechanism 41 as dog 74 is disposed so as to face sensor 72 (S140). A control unit 120 provided in the machine tool moves the step of changing a tool, which will be described below, when the lock state of lock mechanism 41 is detected in detector 71. When the lock state of lock mechanism 41 is not detected in detector 71, control unit 120 stops the progression of the step of changing a tool and issues an alert to the operator.

As shown in Figs. 6, 11, and 12, then, tool change portion 21 is slid from the proximal side to the distal side of predetermined axis 101 by driving slide actuator 91 (rotating motor 92) (S150). While the plurality of rollers 63 become apart from driving plate 82 (the plurality of protrusions 82s), the lock state of lock mechanism 41 is maintained by the elastic force acting on lock pin 42 from spring member 46. First tool Ta is extracted from the tool pot disposed at the tool standby position, and second tool Tb is extracted from the tool spindle.

Subsequently, tool change portion 21 is swiveled 180° by driving swivel actuator 95 (rotating motor 96) (S160). First tool Ta is positioned to face the tool spindle disposed at the tool change position in the machining area, and second tool Tb is positioned to face the tool pot disposed at the tool standby position. Detection pin 73 in detector 71 faces second pin member 66B in the axial direction of predetermined axis 101.

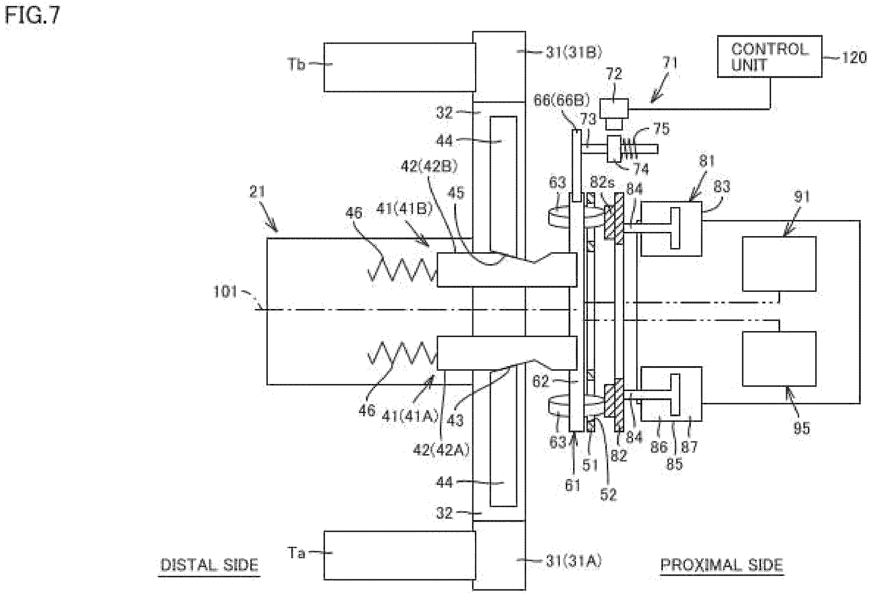

As shown in Figs. 7 and 12, then, tool change portion 21 is slid from the distal side to the proximal side of predetermined axis 101 by driving slide actuator 91 (rotating motor 92) (S170). The plurality of rollers 63 respectively enter the plurality of cut-away portions 52 and come into contact with driving plate 82 (the plurality of protrusions 82s). First tool Ta is inserted into the tool spindle, and second tool Tb is inserted into the tool pot disposed at the tool standby position.

In this step, the detection of the lock state of lock mechanism 41 by detector 71 may or may not be performed.

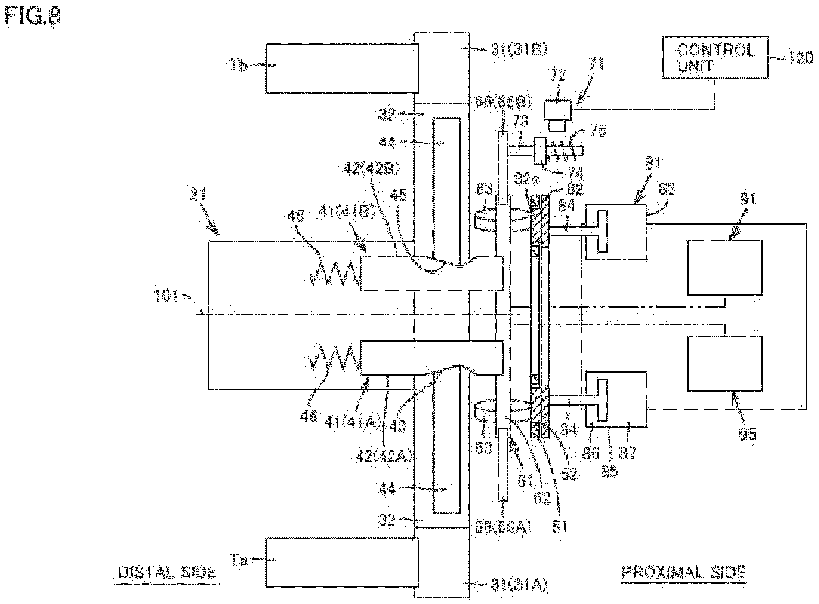

As shown in Figs. 8 and 12, then, first tool Ta is clamped by the tool spindle, and each lock mechanism 41 of first lock mechanism 41A and second lock mechanism 41B is operated from the lock state to the release state by driving lock actuator 81 (extension driving of piston cylinder 83) (S180). The plurality of rollers 63 respectively exit from the plurality of cut-away portions 52. The plurality of protrusions 82s respectively enter the plurality of cut-away portions 52 while maintaining contact with the respective rollers 63. This allows sliding of pin coupling unit 61 from the proximal side to the distal side in the axial direction of predetermined axis 101. Second pin member 66B slides from the proximal side to the distal side of predetermined axis 101. Detection pin 73 in detector 71 slides from the proximal side to the distal side in the axial direction of predetermined axis 101 due to the elastic force of spring member 75.

Detector 71 detects the release state of lock mechanism 41 as dog 74 is disposed so as to be displaced from sensor 72 (S190). When the release state of lock mechanism 41 is detected in detector 71, control unit 120 causes the step of changing a tool, which will be described below, to proceed. When the release state of lock mechanism 41 is not detected in detector 71, control unit 120 stops progress of the step of changing a tool and issues an alert to the operator.

As shown in Figs. 1 and 12, then, tool change portion 21 is swiveled 90° by driving swivel actuator 95 (rotating motor 96) (S200). During swiveling of tool change portion 21, the plurality of rollers 63 rotate while being in contact with base member 51 (first surface 51a). Tool change portion 21 returns to the home position in which tool change portion 21 is oriented such that arm portion 32 extends in the upward-downward direction and second grip portion 31B and first grip portion 31A are disposed above and below tool change portion 21, respectively. The above steps complete the tool change by automatic tool changer 100.

To summarize the structure of automatic tool changer 100 in the embodiment of the present invention described above, automatic tool changer 100 in the present embodiment includes tool change portion 21 that slides in an axial direction of predetermined axis 101 and swivels about predetermined axis 101 to change a tool. Tool change portion 21 includes: first grip portion 31A and second grip portion 31B spaced apart from each other in a circumferential direction of predetermined axis 101, each grip portion being configured to grip a tool; first lock mechanism 41A including first lock pin 42A extending in the axial direction of predetermined axis 101, first lock mechanism 41A operating, in response to a sliding motion of first lock pin 42A along the axial direction of predetermined axis 101, between a lock state in which the tool gripped by first grip portion 31A is held and a release state in which the tool gripped by first grip portion 31A is released; second lock mechanism 41B including second lock pin 42B extending in the axial direction of predetermined axis 101, second lock mechanism 41B operating, in response to a sliding motion of second lock pin 42B along the axial direction of predetermined axis 101, between a lock state in which the tool gripped by second grip portion 31B is held and a release state in which the tool gripped by second grip portion 31B is released; and pin coupling unit 61 that couples first lock pin 42A and second lock pin 42B to each other and slides along the axial direction of predetermined axis 101 during operation of first lock mechanism 41A and second lock mechanism 41B. Automatic tool changer 100 further includes detector 71 configured to detect a position of pin coupling unit 61 in the axial direction of predetermined axis 101.

With this configuration, detector 71 can detect the positions of first lock pin 42A and second lock pin 42B together by detecting the position of pin coupling unit 61. This enables accurate detection of the lock state of the tools gripped by first grip portion 31A and second grip portion 31B. In addition, compared to the case where the positions of first lock pin 42A and second lock pin 42B are detected separately, detector 71 can be configured simply and compactly.

Pin coupling unit 61 includes plate portion 62 connected with first lock pin 42A and second lock pin 42B, and a plurality of rollers 63 attached to plate portion 62 and spaced apart from each other in the circumferential direction of predetermined axis 101. Automatic tool changer 100 further includes base member 51 that faces plate portion 62 in the axial direction of predetermined axis 101 and comes into contact with the plurality of rollers 63 during swiveling of tool change portion 21.

With this configuration, during swiveling of tool change portion 21 about predetermined axis 101, the plurality of rollers 63 rotate while being in contact with base member 51. This enables smooth swiveling of tool change portion 21 about predetermined axis 101.

Automatic tool changer 100 further includes a lock actuator 81 for outputting a sliding motion along the axial direction of predetermined axis 101 to pin coupling unit 61 during operation of first lock mechanism 41A and second lock mechanism 41B, lock actuator 81 having driving plate 82 disposed, in the axial direction of predetermined axis 101, opposite to plate portion 62 with respect to base member 51. Base member 51 has cut-away portion 52 penetrating therethrough in the axial direction of predetermined axis 101. Driving plate 82 has protrusion 82s protruding in the axial direction of predetermined axis 101 and facing cut-away portion 52 in the axial direction of predetermined axis 101. During operation of first lock mechanism 41A and second lock mechanism 41B, protrusion 82s and a corresponding one of the plurality of rollers 63 come into contact with each other through cut-away portion 52.

With this configuration, also in the configuration in which base member 51 is provided between plate portion 62 and driving plate 82 in the axial direction of predetermined axis 101, a configuration is achieved in which the plurality of rollers 63 are brought into contact with base member 51 during swiveling of tool change portion 21 and the plurality of rollers 63 are respectively brought into contact with the plurality of protrusions 82s during operation of first lock mechanism 41A and second lock mechanism 41B.

In addition, in response to a sliding motion of tool change portion 21 along the axial direction of predetermined axis 101 during tool change, pin coupling unit 61 reciprocates between a first position (the position shown in Fig. 3) at which driving plate 82 (the plurality of protrusions 82s) is in contact with the plurality of rollers 63, and a second position (the position shown in Fig. 6) at which driving plate 82 (the plurality of protrusions 82s) is apart from the plurality of rollers 63.

With this configuration, even when the positions of first lock pin 42A and second lock pin 42B are to be detected through detection of the position of driving plate 82, this would not lead to detection of the positions of first lock pin 42A and second lock pin 42B, since driving plate 82 is not integrally coupled with pin coupling unit 61. In contrast, detector 71 detects the position of pin coupling unit 61, which couples first lock pin 42A to second lock pin 42B, and thus, can accurately detect the lock state of the tools gripped by first grip portion 31A and second grip portion 31B.

Pin coupling unit 61 further includes pin member 66 (66A, 66B) protruding from plate portion 62 radially outward of predetermined axis 101. Detector 71 is provided to face pin member 66 (66A, 66B) in the axial direction of predetermined axis 101.

With this configuration, detector 71 can be easily installed without interfering with base member 51.

Automatic tool changer 100 in the present embodiment includes tool change portion 21 that slides in the axial direction of predetermined axis 101 and swivels about predetermined axis 101 to change a tool, and base member 51 disposed to face tool change portion 21 in the axial direction of predetermined axis 101. Tool change portion 21 has the plurality of rollers 63 that are spaced apart from each other in the circumferential direction of predetermined axis 101 and rotate while being in contact with base member 51 during swiveling of tool change portion 21.

With this configuration, the plurality of rollers 63 rotate while being in contact with base member 51 during swiveling of tool change portion 21, thus allowing smooth swiveling of tool change portion 21.

Automatic tool changer 100 further includes slide actuator 91 for outputting a sliding motion along the axial direction of predetermined axis 101 to tool change portion 21. Tool change portion 21 further includes plate portion 62 to which the plurality of rollers 63 are attached and which has a ring shape centered on predetermined axis 101. Slide actuator 91 has a screw 93 that extends along predetermined axis 101, passes through the inside of plate portion 62, and can rotate in the forward direction and the reverse direction about predetermined axis 101, and nut 94 that is screwed onto screw 93 and is connected to tool change portion 21.

With this configuration, the rotation of screw 93 in the forward direction and the reverse direction about predetermined axis 101 is transmitted to nut 94, allowing tool change portion 21 to be slid to one side and the other side along the axial direction of predetermined axis 101.

Automatic tool changer 100 further includes swivel actuator 95 for outputting a rotational motion along the circumferential direction of predetermined axis 101 to tool change portion 21. Tool change portion 21 further includes plate portion 62 to which the plurality of rollers 63 are attached. Plate portion 62 has the plurality of guide pin holes 64 spaced apart from each other in the circumferential direction of predetermined axis 101, each of which extends in the axial direction of predetermined axis 101. Swivel actuator 95 has the plurality of guide pins 99 that extend in the axial direction of predetermined axis 101 and are arranged in the respective guide pin holes 64, and are capable of moving in the circumferential direction of predetermined axis 101.

With this configuration, the motion of the plurality of guide pins 99 in the circumferential direction of predetermined axis 101 is transmitted to plate portion 62, allowing tool change portion 21 to swivel about predetermined axis 101.

A tool changer slides in the axial direction of the predetermined axis and swivels about the predetermined axis to change a tool. The tool exchanger includes: a first grip portion configured to grip a tool; a second grip portion spaced apart from the first grip portion in a circumferential direction of the predetermined axis and being configured to grip a tool; a first lock mechanism including a first lock pin extending in the axial direction of the predetermined axis, the first lock mechanism operating, in response to a sliding motion of the first lock pin along the axial direction of the predetermined axis, between a lock state in which the tool gripped by the first grip portion is held and a release state in which the tool gripped by the first grip portion is released; a second lock mechanism including a second lock pin extending in the axial direction of the predetermined axis, the second lock mechanism operating, in response to a sliding motion of the second lock pin along the axial direction of the predetermined axis, between a lock state in which the tool gripped by the second grip portion is held and a release state in which the tool gripped by the second grip portion is released; a pin coupling unit that couples the first lock pin and the second lock pin to each other and slides along the axial direction of the predetermined axis during operation of the first lock mechanism and the second lock mechanism; and a detector configured to detect a position of the pin coupling unit in the axial direction of the predetermined axis. The pin coupling unit includes a plate portion connected with the first lock pin and the second lock pin, and a plurality of rollers attached to the plate portion and spaced apart from each other in the circumferential direction of the predetermined axis. The tool exchanger further includes a base member that faces the plate portion in the axial direction of the predetermined axis and comes into contact with the plurality of rollers during swiveling of the tool change portion.

The machine tool includes a tool holder configured to hold a tool used for workpiece machining and the above-described tool changer that changes the tool held in the tool holder.

It should be understood that the embodiment disclosed herein has been presented for the purpose of illustration and non-restrictive in every respect. It is therefore intended that the scope of the present invention is defined by claims, rather than the description above, and encompasses all modifications and variations equivalent in meaning and scope to the claims.

### REFERENCE SIGNS LIST

21 tool change portion; 31 grip portion; 31A first grip portion; 31B second grip portion; 31p claw portion; 32 arm portion; 41 lock mechanism; 41A first lock mechanism; 41B second lock mechanism; 42 lock pin; 42A first lock pin; 42B second lock pin; 43 wedge portion; 44 lock rod; 45 tapered portion; 46, 75 spring member; 51 base member; 51a first surface; 52 cut-away portion; 61 pin coupling portion; 62 plate portion; 63 roller; 64 guide pin hole; 66 pin member; 66A first pin member; 66B second pin member; 71 detector; 72 sensor; 73 detection pin; 74 dog; 81 lock actuator; 82 driving plate; 82a second surface; 82s protrusion; 83 piston cylinder; 84 piston rod; 85 cylinder case; 86 second hydraulic chamber; 87 first hydraulic chamber; 91 slide actuator; 92, 96 motor; 93 screw; 94 nut; 95 swivel actuator; 97 first gear; 98 second gear; 99 guide pin; 100 automatic tool changer; 101 predetermined axis; 106 swing axis; 120 control unit; 200 machine tool; 210 tool holder; 220 tool pot; Ta first tool; Tb second tool.

## Claims

1. An automatic tool changer comprising a tool change portion that slides in an axial direction of a predetermined axis and swivels about the predetermined axis to change a tool,
the tool change portion including
a first grip portion and a second grip portion spaced apart from each other in a circumferential direction of the predetermined axis, each grip portion being configured to grip a tool,
a first lock mechanism including a first lock pin extending in the axial direction of the predetermined axis, the first lock mechanism operating, in response to a sliding motion of the first lock pin along the axial direction of the predetermined axis, between a lock state in which the tool gripped by the first grip portion is held and a release state in which the tool gripped by the first grip portion is released,
a second lock mechanism including a second lock pin extending in the axial direction of the predetermined axis, the second lock mechanism operating, in response to a sliding motion of the second lock pin along the axial direction of the predetermined axis, between a lock state in which the tool gripped by the second grip portion is held and a release state in which the tool gripped by the second grip portion is released, and
a pin coupling unit that couples the first lock pin and the second lock pin to each other and slides along the axial direction of the predetermined axis during operation of the first lock mechanism and the second lock mechanism,
the automatic tool changer further comprising a detector configured to detect a position of the pin coupling unit in the axial direction of the predetermined axis.

2. The automatic tool changer according to claim 1, wherein
the pin coupling unit includes
a plate portion connected with the first lock pin and the second lock pin, and
a plurality of rollers attached to the plate portion and spaced apart from each other in the circumferential direction of the predetermined axis, and
the automatic tool changer further comprises a base member that faces the plate portion in the axial direction of the predetermined axis and comes into contact with the plurality of rollers during swiveling of the tool change portion.

3. The automatic tool changer according to claim 2, further comprising a lock actuator for outputting a sliding motion along the axial direction of the predetermined axis to the pin coupling unit during operation of the first lock mechanism and the second lock mechanism, the lock actuator having a driving plate disposed, in the axial direction of the predetermined axis, opposite to the plate portion with respect to the base member, wherein
the base member has a cut-away portion penetrating therethrough in the axial direction of the predetermined axis,
the driving plate has a protrusion protruding in the axial direction of the predetermined axis and facing the cut-away portion in the axial direction of the predetermined axis, and
during operation of the first lock mechanism and the second lock mechanism, the protrusion and a corresponding one of the plurality of rollers come into contact with each other through the cut-away portion.

4. The automatic tool changer according to claim 2 or 3, wherein
the pin coupling unit further includes a pin member protruding from the plate portion radially outward of the predetermined axis, and
the detector is provided to face the pin member in the axial direction of the predetermined axis.
